# EUROPEAN PATENT SPECIFICATION

(11) **EP 1 465 513 B1**
(45) Date of publication and mention of the grant of the patent: **15.06.2005**
(21) Application number: 02712249.8
(22) Date of filing: 14.01.2002
(51) Int. Cl.: A47J 31/04, A47J 31/30

(54) **DEVICE FOR MAKING COFFEE-CREAM FOR ESPRESSO COFFEE-MACHINES**
VORRICHTUNG ZUM BEREITEN VON CREME FÜR ESPRESSO-KAFFEEMASCHINEN
DISPOSITIF PERMETTANT D'OBTENIR DE LA CREME DE CAFE ET DESTINE A DES MACHINES A CAFE ESPRESSO

(43) Date of publication of application: 13.10.2004
(73) Proprietor: BARDAZZI, Bruno, 50037 San Piero a Sieve, Firenze (IT)
(72) Inventor: BARDAZZI, Bruno, 50037 San Piero a Sieve, Firenze (IT)
(74) Representative: Cicogna, Franco
(86) International application number: PCT/IT2002/000013
(87) International publication number: WO 2003/056986

(56) References cited:
- WO-A-98/17160
- DE-C- 520 559
- FR-A- 1 061 936
- FR-A- 2 041 380
- US-A- 3 044 388
- US-A- 4 167 899

## Description

The present invention relates to a device to be applied for espresso coffee machines, of the home type, which are conventionally called "moka" machines, for producing the "coffee-cream".

As is known, to make the so-called "coffee-cream", i.e. a foamed relatively dense coffee infusion, by using coffee machines for home use is a rather difficult operation.

In fact, for making such a coffee type, it is necessary to supply the infusion water through the powder coffee held in a powder coffee holder basket, with such a pressure and speed as to allow the aromatic parts of the coffee powder to be easily extracted.

For achieving the above mentioned result in moka machines, devices have been already designed, but, said devices, have been found to be very complex and, which is most important, they cannot be applied on existing espresso coffee machines, but require the construction of specially designed coffee machines.

The document FR-A-2 041 380 discloses a device for making a coffee cream according to the preamble of claim 1.

### SUMMARY OF THE INVENTION

Accordingly, the main object of the present invention is to provide such a constructively simple and unexpensive device which can be easily applied also to existing moka coffee machines, and which allows to produce, by said machines, the so-called "coffee-cream".

According to the present invention, the above object is achieved as claimed in claim 1.

### BRIEF DESCRIPTION OF THE DRAWING

Further objects, characteristics and advantages of the present invention will become more apparent hereinafter from the following detailed disclosure of a preferred embodiment thereof, with reference to the accompanying drawing, where:

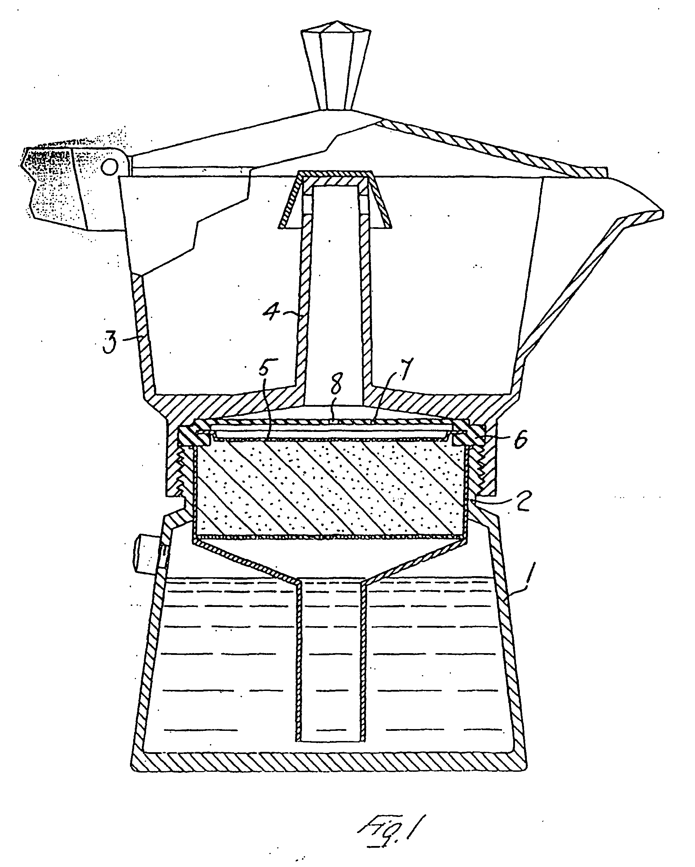

Figure 1 is a longitudinal cross-sectional view of a moka type of espresso coffee making machines, to which a device according to the present invention has been applied.

### DESCRIPTION OF THE PREFERRED EMBODIMENT

The coffee machines shown in the above mentioned figure, is of a conventional type and comprises, in per se known manner, a boiler 1, in which is arranged a fun-like element bearing the coffee powder basket element 2.

On the boiler 1 a top cup element 3 is screwed, said top cup element including a central upright tubular stem 4.

In prior coffee making machines, in the bottom of the coffee maker 3 top cup is arranged a perforated filter 5, and between said filter 5 and boiler 1 a sealing gasket 6 is provided.

According to the present invention, downstream of the perforated filter 5 resilient membrane 7, including one or more microholes 8, having a diameter of few millimeter tens, for example 0.4 millimeters, is arranged.

The above mentioned microholes can also be replaced by small incisions or notches, having a size varying from few tens of millimeters to few millimeters, and which are formed through the mentioned membrane 7.

Said membrane is preferably made of an elastomeric material, having characteristics similar to that of rubber and, for example, can be made by using silicone rubber.

Advantageously, the membrane 7 can be formed so as to form a single piece with the gasket 6.

In this case, the gasket 6 comprises a circular notch, formed along the peripheral inner edge thereof, and operating as a housing recess for the peripheral edge of the filter 5, as is clearly shown in figure 1.

The above disclosed device should be apparent from the above disclosure.

Actually, in delivering the coffee infusion, as the infusion pressure downstream of the membrane 7 achieves a given value, the central region of the membrane 7 is resiliently deformed, so as to be upward deflected.

The above mentioned deformation causes the mentioned holes 8 to be enlarged, thereby allowing the infusion to quickly pass through the central upright duct 4 into the coffee maker proper 3, while forming the desired "coffee-cream".

It should be apparent that the invention, as disclosed, is not limited to the shown and disclosed embodiment, but is susceptible to several variations and modifications coming within the scope of the invention as claimed in the accompanying claims.

## Claims

1. A device, for application to moka coffee machines, for making the so-called "coffee-cream", comprising a boiler (1) and a top cup (3), a perforated filter (5) in the bottom of said cup, whereby downstream of said filter (5) overlaying a basket element (2) for holding a coffee powder therein, is applied a membrane (7) made of rubber or other elastomeric material and including one or more microholes (8), and/or one or more incisions, **characterized in that** said membrane (7) is rigid with a sealing gasket (6) arranged between the coffee machine boiler (1) and cup (3), said sealing gasket (6) including an annular incision extending along its inner peripheral edge for engaging therein an outer peripheral edge of said filter (5).

2. A device, according to claim 1, **characterized in that** the microholes (8) formed through said rubber or other elastomeric material membrane have a size from 0.1 to 0.7 mm.

3. A device, according to one or more of the preceding claims, **characterized in that** said membrane (7) is adapted to be deformed by the pressure applied thereon by heated water, which heated water subjects said membrane (7) to a resilient deformation to cause said membrane (7) to assume a bulged configuration, with an upward facing convexity, whereas the water and steam exiting from the coffee machine boiler passes with a high speed through the coffee powder arranged in said coffee powder basket element and said filter (5).

4. A device, according to one or more of the preceding claims, **characterized in that** said membrane (7) is subjected to a pressure stress, because of its elasticity, and is so deformed as to cause said microholes (8) and/or incisions therefrom to be enlarged thereby allowing a coffee and steam infusion flow to pass with a high speed therethrough.

5. A device, according to one or more of the preceding claims, **characterized in that** said incisions have either a rectilinear or a curved configuration, or a configuration resulting from a combination of differently shaped portions thereof.

6. A device for application to espresso coffee machines, according to one or more of the preceding claims, **characterized in that** said membrane (7) is separated from said filter (5).

7. A device, according to one or more of the preceding claims, **characterized in that** said membrane (7) operates as a resilient safety valve, designed for allowing a quick passage of the coffee infusion therethrough as in said boiler (1) a pressure corresponding to an optimum temperature for making a coffee-cream is achieved.

8. A device, according to one or more of the preceding claims, **characterized in that** said resilient membrane (7), upon ending the coffee infusion flow, automatically assumes its starting arrangement, so as to close said microholes (8).

## Patentansprüche

1. Vorrichtung - zur Verwendung in Mokka-Kaffeemaschinen - zum Bereiten der sogenannten "Creme", umfassend einen Kessel (1) und einen Aufsatz (3), einen perforierten Filter (5) im Boden des Aufsatzes, wobei stromabwärts des Filters (5), der über einem Korbelement (2), das zur Aufnahme eines Kaffeepulvers dient, angeordnet ist, eine Membran (7) angeordnet ist, die aus Gummi oder einem anderen elastomeren Material besteht und eine oder mehrere Mikrolöcher (8) und/oder einen oder mehrere Einschnitte enthält, **dadurch gekennzeichnet, dass** die Membran (7) starr ist, wobei zwischen dem Kessel (1) der Kaffeemaschine und dem Aufsatz (3) eine Dichtung (6) angeordnet ist, die einen ringförmigen Einschnitt enthält, der sich entlang ihres Innenumfangsrandes erstreckt und dazu dient, in sich einen Außenumfangsrand des Filters (5) aufzunehmen.

2. Vorrichtung nach Anspruch 1, **dadurch gekennzeichnet, dass** die Mikrolöcher (8), die in der Membran aus Gummi oder einem anderen elastomeren Material ausgebildet sind, eine Größe von 0,1 bis 0,7 mm aufweisen.

3. Vorrichtung nach einem oder mehreren der vorangehenden Ansprüche, **dadurch gekennzeichnet, dass** die Membran (7) so beschaffen ist, dass sie durch den Druck verformt wird, den erhitztes Wasser auf sie ausübt, wobei dieses erhitzte Wasser eine elastische Verformung der Membran (7) bewirkt, dergestalt, dass die Membran (7) eine ausgebauchte Form annimmt, die nach oben konvex ist, während das Wasser und der Dampf, die aus dem Kessel der Kaffeemaschine austreten, mit hoher Geschwindigkeit das Kaffeepulver, das sich in dem Kaffeepulver-Korbelement befindet, und den Filter (5) passieren.

4. Vorrichtung nach einem oder mehreren der vorangehenden Ansprüche, **dadurch gekennzeichnet, dass** auf die Membran (7) aufgrund ihrer Elastizität eine Druckbelastung ausgeübt wird und dass die Membran (7) so verformt wird, dass die darin befindlichen Mikrolöcher (8) und/oder Einschnitte vergrößert werden, so dass ein Kaffee-Dampf-Infusionsstrom mit hoher Geschwindigkeit dort hindurch passieren kann.

5. Vorrichtung nach einem oder mehreren der vorangehenden Ansprüche, **dadurch gekennzeichnet, dass** die Einschnitte entweder eine geradlinige oder eine gekrümmte Konfiguration oder eine Konfiguration, die aus einer Kombination unterschiedlich geformter Abschnitte dieser Einschnitte resultieren, aufweist.

6. Vorrichtung - zur Verwendung in Espresso-Kaffeemaschinen - nach einem oder mehreren der vorangehenden Ansprüche, **dadurch gekennzeichnet, dass** die Membrane (7) von dem Filter (5) getrennt ist.

7. Vorrichtung nach einem oder mehreren der vorangehenden Ansprüche, **dadurch gekennzeichnet, dass** die Membrane (7) als ein elastisches Sicherheitsventil fungiert, das dafür konzipiert ist, ein schnelles Passieren der Kaffee-Infusion dort hindurch zu gestatten, wenn in dem Kessel (1) ein Druck, der einer optimalen Temperatur zur Bereitung einer Creme entspricht, erreicht ist.

8. Vorrichtung nach einem oder mehreren der vorangehenden Ansprüche, **dadurch gekennzeichnet, dass** die elastische Membrane (7) nach Beendigung des Kaffee-Infusionsstromes automatisch zu ihrer Ausgangskonfiguration zurückkehrt, dergestalt, dass die Mikrolöcher (8) geschlossen werden.

## Revendications

1. Dispositif, pour une application à des machines à café de type moka, pour créer ce que l'on appelle un « café-crème », comprenant une bouilloire (1) et une coupe supérieure (3), un filtre perforé (5) placé dans le fond de ladite coupe, au moyen duquel, vers le bas dudit filtre (5) recouvrant un élément de type panier (2) pour y maintenir du café en poudre, est appliquée une membrane (7) fabriquée en caoutchouc ou en un autre matériau élastomère et comprenant un ou plusieurs micro-orifices (8), et/ou une ou plusieurs incisions, **caractérisé en ce que** en ce ladite membrane (7) est rigide avec un joint d'étanchéité (6) disposé entre la bouilloire (1) de la machine à café et la coupe (3), ledit joint d'étanchéité (6) comprenant une incision annulaire s'étendant le long de son rebord périphérique interne pour y engager un rebord périphérique externe dudit filtre (5).

2. Dispositif, selon la revendication 1, **caractérisé en ce que** les micro-orifices (8) formés à travers ladite membrane en caoutchouc ou en un autre matériau élastomère possèdent une taille comprise entre 0,1 et 0,7 mm.

3. Dispositif, selon l'une quelconque des revendications précédentes, **caractérisé en ce que** ladite membrane (7) est adaptée pour être déformée par la pression qui y est appliquée par de l'eau chaude, cette eau chaude soumet ladite membrane (7) à une déformation élastique afin que la membrane (7) prenne une configuration bombée, avec une convexité faisant face vers le haut, d'où l'eau et la vapeur, quittant la bouilloire de la machine à café, traversent avec une grande vitesse le café en poudre disposé dans ledit élément de type panier et ledit filtre (5).

4. Dispositif, selon l'une quelconque des revendications précédentes, **caractérisé en ce que** ladite membrane (7) est soumise à une force de pression, à cause de son élasticité, et est déformée de manière à provoquer, à partir de là, l'élargissement desdits micro-orifices (8) et/ou incisions, de ce fait permettant à l'écoulement de l'infusion de café et de la vapeur de la traverser avec une grande vitesse.

5. Dispositif, selon l'une quelconque des revendications précédentes, **caractérisé en ce que** lesdites incisions possèdent chacune une configuration aussi bien rectiligne que courbée, ou une configuration résultant d'une combinaison de parties de différentes formes de celles-ci.

6. Dispositif, selon l'une quelconque des revendications précédentes, **caractérisé en ce que** ladite membrane (7) est séparée dudit filtre (5).

7. Dispositif, selon l'une quelconque des revendications précédentes, **caractérisé en ce que** ladite membrane (7) agit comme une valve de sécurité élastique, étudiée pour permettre un passage rapide de l'infusion de café au travers d'elle, puisque dans ladite bouilloire (1) une pression correspondant à une température optimale de fabrication d'un café-crème est obtenue.

8. Dispositif, selon l'une quelconque des revendications précédentes, **caractérisé en ce que** ladite membrane élastique (7), lors de la fin de l'écoulement de l'infusion de café, reprend automatiquement sa configuration de départ, de manière à fermer les micro-orifices (8).
